# FASCICULE DE BREVET EUROPEEN

(11) **EP 3 210 864 B1**
(45) Date de publication et mention de la délivrance du brevet: **30.01.2019**
(21) Numéro de dépôt: 17156463.6
(22) Date de dépôt: 16.02.2017
(51) Int. Cl.: B62D 33/04

(54) **PANNEAU DE CARROSSERIE POUR VÉHICULES FRIGORIFIQUES**
KAROSSERIEPANEEL FÜR KÜHLFAHRZEUGE
REFRIGERATED VEHICLE BODY PANEL

(30) Priorité: 23.02.2016 FR 1651465
(43) Date de publication de la demande: 30.08.2017
(73) Titulaire: Jean Chereau SAS, 50220 Ducey (FR)
(72) Inventeur: CHAILLOU, Frédéric, 35133 St Sauveur des Landes (FR); COURTEILLE, Benoît, 50300 Avranches (FR)
(74) Mandataire: Casalonga

(56) Documents cités:
- EP-A2- 1 045 079
- DE-A1-102008 011 266
- FR-A1- 2 483 564
- US-A- 3 011 254

## Description

La présente invention concerne le domaine général des véhicules frigorifiques, notamment pour le transport de marchandises.

Plus particulièrement, la présente invention concerne le domaine de la construction de parois, en particulier pour la réalisation de carrosseries de véhicules de transport de marchandises, notamment de véhicules routiers frigorifiques.

Les parois de carrosseries de véhicules sont réalisées, de façon courante, sous la forme de panneaux uniques qui comprennent généralement un coeur en une matière thermiquement isolante courante, par exemple en polyuréthane, et des plaques recouvrant les faces opposées de ce coeur, par exemple des plaques de tôles métalliques ou de matières composites de fibres de verre et de résine, ces plaques étant d'une seule pièce pour des questions de résistance mécanique des parois et de continuité des surfaces extérieures des parois liée à l'esthétique.

Afin de tenter d'améliorer les caractéristiques d'isolation thermique, il est connu de réaliser des panneaux comprenant des éléments d'isolation sous vide, qui sont intégrés entre des couches en des matières thermiquement isolantes, qui les enveloppent et qui sont collées, les panneaux comprenant en outre des plaques extérieures de recouvrement. De tels panneaux sont décrits dans le brevet EP 1 045 079.

Comme les éléments d'isolation sous vide sont disposés à distance les uns des autres, il existe une discontinuité de l'isolation thermique dans le sens de l'épaisseur des panneaux entre les endroits où ces éléments d'isolation sous vide se situent et les endroits où ceux-ci sont séparés par une matière isolante. De plus, lors de leur fabrication, ces panneaux nécessitent de nombreuses opérations et il existe des risques de détérioration des éléments d'isolation sous vide lors de leur mise en place entre les couches isolantes et les plaques extérieures.

Le brevet DE 10 2008 011266 A1 décrit un panneau selon le préambule de la revendication 1. Ce panneau comprend un caisson extérieur étanche qui présente des plaques principales opposées, un cadre formant des champs et une couche qui est contenue à l'intérieur dudit caisson extérieur, en contact avec lesdites plaques principales, et qui présente des cavités fermées sous vide.

La présente invention a pour but de proposer un panneau de carrosserie amélioré.

Selon un mode de réalisation, il est proposé un panneau de carrosserie pour véhicules frigorifiques, qui comprend un caisson extérieur en au moins une matière étanche aux gaz et aux liquides, présentant des plaques principales opposées et un cadre formant des champs, et une âme de maintien contenue à l'intérieur dudit caisson extérieur, en contact avec lesdites plaques principales.

Ladite âme de maintien aménage des cellules creuses ouvertes, qui communiquent entre elles, et ledit caisson extérieur est pourvu d'au moins un orifice traversant débouchant à l'intérieur dudit caisson extérieur et d'un moyen de fermeture pour fermer de façon étanche aux gaz et aux liquides ledit orifice.

L'âme de maintien peut être en contact avec les champs dudit caisson extérieur.

L'âme de maintien peut comprendre au moins un bloc poreux à cellules ouvertes présentant des faces opposées en appui contre lesdites plaques principales opposées.

Ledit bloc peut comprendre une mousse poreuse d'une matière synthétique à cellules ouvertes.

Ledit bloc peut comprendre une poudre organique et/ou minérale renforcée à cellules ouvertes.

L'âme de maintien peut comprendre un module en nids d'abeilles dont les parois formant des cellules ou alvéoles s'étendent entre les parois opposées dudit caisson extérieur et présentent des passages traversants de communication entre ces cellules et avec ledit orifice.

Le caisson extérieur peut comprendre au moins une partie métallique.

Le caisson extérieur peut comprendre au moins une couche en une matière composite et au moins une feuille métallique.

Au moins une couche en une matière thermiquement isolante et étanche aux gaz et aux liquides, peut être interposée entre le cadre et au moins l'une desdites plaques principales du caisson extérieur.

Au moins une partie du cadre et au moins l'une desdites plaques principales du caisson extérieur peuvent être réalisées d'une seule pièce.

La pression absolue du gaz à l'intérieur dudit caisson extérieur peut être inférieure à cent millibars (10 kiloNewtons par mètre carré).

La matière constituant l'âme de maintien peut présenter une résistance à la compression telle que, sous une pression égale à un bar (100 kiloNewtons par mètre carré), sa réduction d'épaisseur est inférieure à cinq pour cent (5%).

La matière constituant le caisson extérieur peut présenter un module d'élasticité (module de Young) au moins égal à huit mille Newtons par millimètre carré (N/mm2).

La matière constituant le caisson extérieur peut présenter une dureté comprise entre cinq et cinquante Barcols.

La matière constituant le caisson extérieur peut présenter une résistance à la traction au moins égale à cinquante Newtons par millimètre carré (50 N/mm2).

Des panneaux de carrosserie vont maintenant être décrits à titre d'exemples non limitatifs, illustrés par le dessin sur lequel :
- la figure 1 représente une vue éclatée en perspective d'un panneau de carrosserie ;
- la figure 2 représente une coupe transversale partielle du panneau de carrosserie, en un endroit quelconque ;
- la figure 3 représente une coupe transversale partielle du panneau de la figure 1, à l'endroit d'un moyen de fermeture ;
- la figure 4 représente une coupe transversale partielle d'une variante de réalisation du panneau de la figure 1 ; - la figure 5 représente une vue éclatée en perspective d'une variante de réalisation dudit panneau de carrosserie ; et
- la figure 6 représente une coupe transversale partielle du panneau de la figure 1, à l'endroit d'un autre moyen de fermeture.

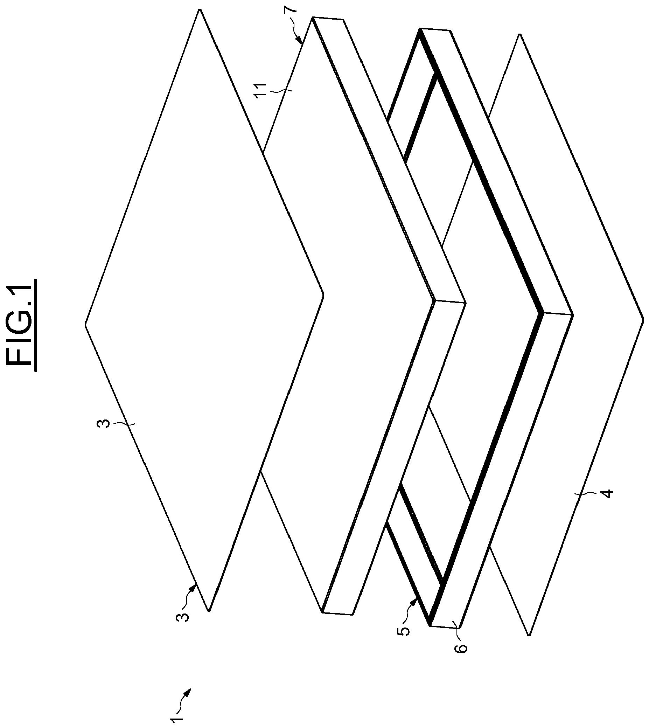

Selon une variante de réalisation illustrée sur les figures 1 à 3, un panneau de carrosserie 1 comprend un caisson extérieur 2, de forme générale parallélépipédique, étanche aux gaz et aux liquides.

Le caisson extérieur 2 comprend des plaques principales opposées parallèles 3 et 4 qui forment les flancs extérieurs du panneau 1 et un cadre périphérique 5 qui relie ces plaques principales 3 et 4 et qui forme des champs 6 du caisson 2, ces champs 6 étant perpendiculaires aux parois principales 3 et 4. Le cadre périphérique 5 est placé entre les parties périphériques des faces intérieures des plaques principales 3 et 4.

La surface des parois principales 3 et 4 constituant les flancs du panneau 1 peut atteindre plusieurs mètres carrés et l'épaisseur du panneau 1 est généralement de quelques centimètres et peut être comprise entre trois et dix centimètres. L'épaisseur des plaques principales 3 et 4 et des champs du cadre périphérique 5 peut être comprise entre un dixième et cinq millimètres.

Le panneau de carrosserie 1 comprend en outre une âme intérieure de maintien 7 contenue à l'intérieur du caisson extérieur 2. Cette âme de maintien 7 est en contact avec les plaques principales 3 et 4. De préférence, cette âme de maintien 7 est aussi en contact avec les champs 6 du cadre 5 du caisson extérieur 2. L'âme de maintien 7 aménage spécifiquement des cellules creuses qui communiquent entre elles.

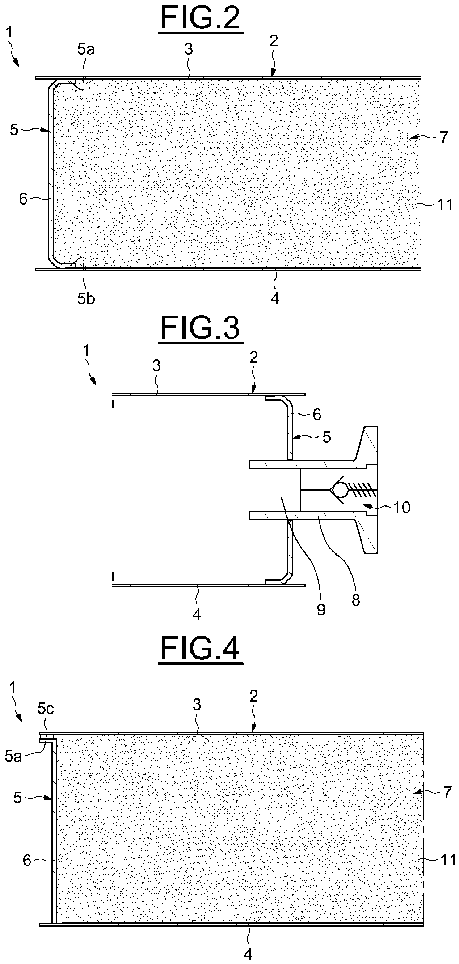

Comme illustré sur la figure 3, le cadre périphérique 5 est muni, en un endroit de sa périphérie, d'un embout 8 monté de façon étanche aux gaz et aux liquides au travers d'un trou de l'un de ses champs 6 et fixé à la périphérie de ce trou par une soudure, une brasure, une colle ou par l'intermédiaire un joint d'étanchéité. Cet embout 8 aménage un orifice 9 qui communique avec l'intérieur du caisson extérieur 2 et donc avec les cellules creuses de l'âme de maintien 7.

L'embout 8 est muni d'un moyen de fermeture étanche aux gaz et aux liquides. Selon l'exemple représenté, ce moyen de fermeture comprend un clapet d'anti-retour 10 monté de façon étanche aux gaz et aux liquides dans l'orifice 9.

On relie l'embout 8 à un dispositif d'aspiration (non représenté) pour produire à l'intérieur du caisson extérieur 2 une pression inférieure à la pression atmosphérique, le vide relatif obtenu à l'intérieur du caisson extérieur 2 étant maintenu sous l'effet du clapet d'anti-retour 10. Ainsi, le panneau 1 est dans un état dit « sous vide », lui conférant une qualité d'isolant thermique. Avant cette opération d'aspiration, on peut assécher au moins en partie l'intérieur du caisson extérieur 2.

Après cette mise sous vide, on peut installer, par sécurité, un bouchon sur l'embout 8 de façon étanche aux gaz et aux liquides.

Selon une autre variante de réalisation, l'orifice 9 pourrait être fermé directement par un bouchon, une soudure ou une colle, étanches aux gaz et aux liquides. L'orifice 9 pourrait être aménagé directement au travers du champ 6, sans l'existence de l'embout 9.

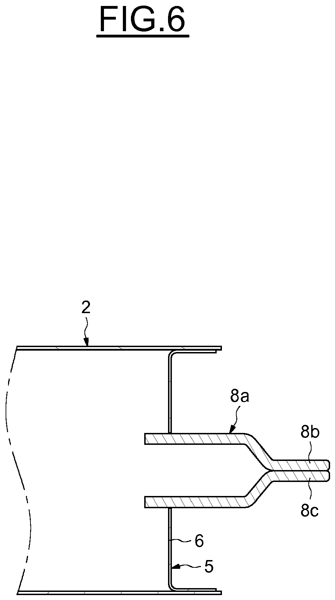

Selon une variante de réalisation illustrée sur la figure 6, l'embout 8 pourrait être remplacé par un conduit 8a en une matière déformable, par exemple en cuivre, traversant et fixé de façon étanche aux gaz et aux liquides à un champ du caisson 2 et dépassant à l'extérieur. Le vide relatif étant obtenu à l'intérieur du caisson extérieur 2 via le conduit 8a, on procède à la fermeture du conduit 8a par un écrasement d'une portion extérieure d'extrémité du conduit 8a à l'aide d'une pince produisant une forte pression afin que les deux parties accolées obtenues 8b et 8c adhèrent de façon étanche aux liquides et aux gaz.

Selon une variante de réalisation, l'orifice 9 et le moyen de fermeture de cet orifice 10 pourraient être prévus au travers de l'une des plaques principales 3 et 4.

On obtient ainsi, un panneau de carrosserie 1 à isolation totale sous vide, directement utilisable.

Le caisson extérieur 2 et l'âme de maintien 7 sont choisis en des matériaux tels que le panneau de carrosserie 1, obtenu après la mise sous vide du caisson extérieur 2, conserve substantiellement sa forme initiale et ne se déforme qu'en deçà d'un taux de déformation prédéterminé ou souhaité, c'est-à-dire ne s'effondre pas sur lui-même ou ne collapse.

Plus précisément, l'âme de maintien 7 constitue une entretoise apte à supporter les charges qui lui sont appliquées par les plaques principales 3 et 4 sous l'effet du vide créé dans le caisson extérieur 2 et à empêcher les plaques opposées 3 et 4 de se rapprocher et de se déformer vers l'intérieur. De préférence, l'âme de maintien 7 produit également cet effet sur le cadre périphérique 5.

En outre, grâce à l'existence des cellules creuses qu'elle forme et qui communiquent entre elles et avec l'orifice 9, l'âme de maintien 7 assure en même temps une homogénéité de pression dans tout le volume intérieur du caisson extérieur 2 du vide créé.

Le caisson extérieur 2 et l'âme de maintien 7 sont en outre choisis en des matériaux tels que la qualité d'isolant thermique du panneau de carrosserie 1 est encore améliorée, notamment en réduisant ou en évitant des ponts thermiques entre les plaques principales 3 et 4 du caisson extérieur 2.

Les plaques principales 3 et 4 du caisson extérieur 2 sont en outre choisies en un ou des matériaux tels que ces plaques résistent aux chocs.

Les plaques principales opposées 3 et 4, étanches aux gaz et aux liquides, peuvent être formées, l'une et/ou l'autre, par des plaques métalliques, par exemple en un acier inoxydable, ou par des plaques multicouches incluant au moins une plaque en une matière composite, par exemple en fibre de verre et résine, et, de préférence, au moins une feuille métallique, par exemple en aluminium.

Selon une variante de réalisation illustrée sur les figures 1 à 3, l'âme de maintien 7 comprend un bloc préfabriqué 11 en une mousse poreuse à cellules ouvertes d'une matière synthétique, par exemple de polyuréthane, aménageant des cellules creuses qui communiquent entre elles. Le bloc 11 est en contact et s'étend régulièrement sur quasiment toute la surface intérieure des plaques 3 et 4 du caisson extérieur 2.

Selon une variante de réalisation, le bloc 11 peut comprendre une poudre ou un aérogel organique et/ou minéraux renforcés à cellules ouvertes, par exemple à base de silice ou de silica ou dioxyde de silicium.

Sous l'effet du vide créé dans le caisson extérieur 2, les plaques principales 3 et 4 sont plaquées sur les faces opposées correspondantes du bloc préfabriqué 11. Les cellules creuses du bloc préfabriqué 11 peuvent présenter une dimension comprise entre un ou quelques nanomètres et un ou quelques millimètres.

Le bloc 11 peut être d'une seule pièce ou peut comprendre plusieurs parties.

Selon la variante illustrée sur les figures 1 à 3, le cadre périphérique 5 peut comprendre de la fibre de verre noyée dans une résine et, de préférence, au moins une feuille métallique, par exemple en aluminium, ou une plaque en une matière plastique, étanches aux gaz et aux liquides.

Le cadre périphérique 5 présente des rebords périphériques opposés 5a et 5b et qui sont accouplés aux parties périphériques des faces intérieures des plaques principales 3 et 4 par l'intermédiaire d'une fine couche de colle étanche aux gaz et aux liquides, par exemple une colle époxy. Ainsi, un pont thermique entre les plaques principales 3 et 4, via le cadre 5, est évité.

Selon une autre variante de réalisation illustrée sur la figure 4, le cadre 5 est métallique, par exemple en un acier inoxydable. Cette fois, l'un des bords du cadre 5 est fixé sur l'une des plaques principales 3 et 4, par exemple par collage ou soudage, tandis que l'autre bord est muni d'un rebord 5a accouplé à l'autre plaque par l'intermédiaire d'une couche épaisse 5c d'une colle étanche aux gaz et aux liquides et présentant une qualité d'isolant thermique, par exemple une couche épaisse de colle époxy, qui limite un pont thermique entre les plaques principales 3 et 4. Néanmoins, le rebord 5a pourrait être soudé directement sur la plaque adjacente.

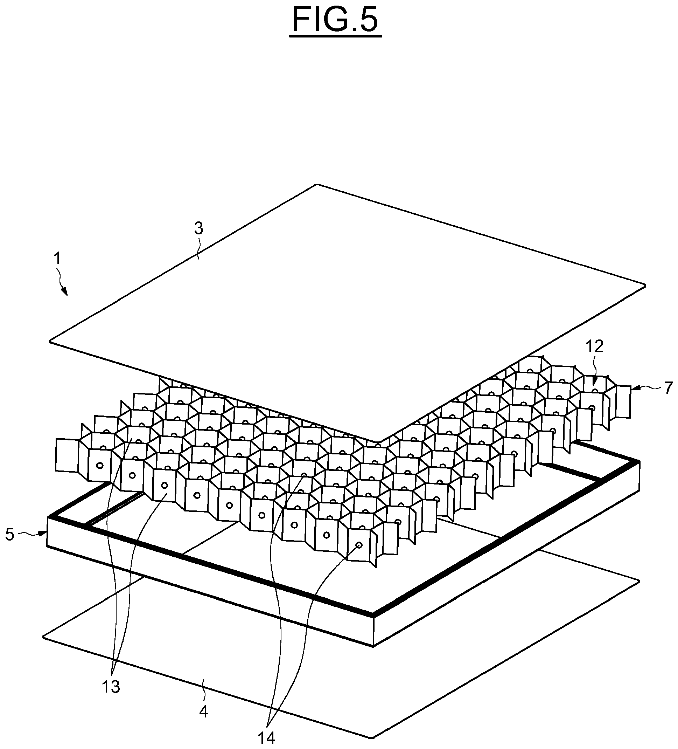

Selon une autre variante de réalisation illustrée sur la figure 5, l'âme de maintien 7 comprend un module en nids d'abeilles 12 dont les parois 13 délimitent des cellules creuses ou alvéoles qui s'étendent entre les plaques principales 3 et 4 du caisson extérieur 2.

Les parois 13 du module en nids d'abeilles 12 s'étendent perpendiculairement aux plaques 3 et 4 et présentent des extrémités en contact avec les faces intérieures des plaques 3 et 4 de sorte que ces parois 13 constituent des entretoises entre ces plaques 3 et 4. De préférence, les parois 13 de la périphérie du module en nids d'abeille 12 sont en contact avec les champs 6 formés par le cadre périphérique 5.

Les parois 13 du module en nids d'abeilles 12 présentent des passages traversants 14 de communication entre les cellules ou alvéoles creuses et avec l'orifice 9 du cadre 5. Ces passages 14 peuvent être formés par des trous qui traversent les parois 13 ou par des échancrures aménagées dans les extrémités des parois 13 et adjacentes aux plaques 3 et 4 et/ou au cadre périphérique 5 du caisson extérieur 2.

Les parois 13 du module en nids d'abeilles 12 sont réalisées pour supporter les charges qui lui sont appliquées par les plaques principales 3 et 4 sous l'effet du vide créé dans le caisson extérieur 2, en évitant notamment le flambement de ces parois 13.

Pour éviter un pont thermique entre les plaques principales 3 et 4, les parois 13 du module en nids d'abeilles 12 sont choisies en une matière thermiquement isolante, par exemple en fibres de verre imprégnée d'une résine.

Les dimensions des cellules ou alvéoles creuses du module en nids d'abeilles 12, parallèlement aux plaques principales 3 et 4, peuvent être comprises entre cinq et cent millimètres.

Selon un exemple de réalisation, la pression absolue du gaz à l'intérieur du caisson extérieur 2 peut être inférieure à 100 millibars (soit : 10 kiloNewtons par mètre carré).

Selon un exemple de réalisation, la matière constituant l'âme de maintien 5 peut présenter une résistance à la compression telle que, sous une pression égale à un bar (soit : 100 kiloNewtons par mètre carré), sa réduction d'épaisseur est inférieure à cinq pour cent (5%).

Selon un exemple de réalisation, la matière constituant les plaques extérieures 3 et 4 et celle constituant le cadre périphérique du caisson extérieur 2 peut présenter un module d'élasticité (ou module de Young) supérieur à huit mille Newtons (8000 Newtons) par millimètres carré (N/mm2).

Selon un exemple de réalisation, la matière constituant le caisson extérieur 2 peut présenter une dureté comprise entre cinq et cinquante Barcols.

Selon un exemple de réalisation, la matière constituant le caisson extérieur 2 peut présenter une résistance à la traction supérieure à cinquante Newtons par millimètre carré (50 N/mm2).

Le panneau de carrosserie 1 peut être appliqué à la réalisation des parois, des pavillons, des planchers et des portes de compartiments frigorifiques de camions, de camionnettes, de semi-remorques, sous la forme de panneaux uniques ou de panneaux accouplés bout à bout, qui peuvent être en outre recouverts de couches de peinture et/ou de vernis.

## Revendications

1. Panneau de carrosserie pour véhicules frigorifiques, comprenant
- un caisson extérieur (2) en au moins une matière étanche aux gaz et aux liquides, présentant des plaques principales opposées (3, 4) et un cadre (5) formant des champs (6),
- et une âme de maintien (7) contenue à l'intérieur dudit caisson extérieur, en contact avec lesdites plaques principales,
**caractérisé par le fait que** ladite âme de maintien (7) aménage des cellules creuses ouvertes, qui communiquent entre elles,
et que ledit caisson extérieur (2) est pourvu d'au moins un orifice traversant (9) débouchant à l'intérieur dudit caisson extérieur et d'un moyen de fermeture pour fermer de façon étanche aux gaz et aux liquides ledit orifice.

2. Panneau selon la revendication 1, dans lequel l'âme de maintien (7) est en contact avec les champs dudit caisson extérieur.

3. Panneau selon l'une des revendications 1 et 2, dans lequel l'âme de maintien (7) comprend au moins un bloc poreux à cellules ouvertes (11) présentant des faces opposées en appui contre lesdites plaques principales opposées (3, 4).

4. Panneau selon la revendication 3, dans lequel ledit bloc (11) comprend une mousse poreuse d'une matière synthétique à cellules ouvertes.

5. Panneau selon la revendication 3, dans lequel ledit bloc (11) comprend une poudre organique et/ou minérale renforcée à cellules ouvertes.

6. Panneau selon l'une des revendications 1 et 2, dans lequel l'âme de maintien (7) comprend un module en nids d'abeilles (12) dont les parois (13) formant des cellules ou alvéoles s'étendent entre les parois opposées (3, 4) dudit caisson extérieur (2) et présentent des passages traversants (14) de communication entre ces cellules et avec ledit orifice (9).

7. Panneau selon l'une quelconque des revendications précédentes, dans lequel le caisson extérieur (2) comprend au moins une partie métallique.

8. Panneau selon l'une quelconque des revendications précédentes, dans lequel le caisson extérieur (2) comprend au moins une couche en une matière composite et au moins une feuille métallique.

9. Panneau selon l'une quelconque des revendications précédentes, dans lequel au moins une couche (5c) en une matière thermiquement isolante et étanche aux gaz et aux liquides, est interposée entre le cadre (5) et au moins l'une desdites plaques principales (3, 4) du caisson extérieur (2).

10. Panneau selon l'une quelconque des revendications précédentes, dans lequel au moins une partie du cadre (5) et au moins l'une desdites plaques principales (3, 4) du caisson extérieur (2) sont réalisées d'une seule pièce.

11. Panneau selon l'une quelconque des revendications précédentes, dans lequel la pression absolue du gaz à l'intérieur dudit caisson extérieur (2) est inférieure à cent millibars (10 kiloNewtons par mètre carré).

12. Panneau selon l'une quelconque des revendications précédentes, dans lequel la matière constituant l'âme de maintien (7) présente une résistance à la compression telle que, sous une pression égale à un bar (100 kiloNewtons par mètre carré), sa réduction d'épaisseur est inférieure à cinq pour cent (5%).

13. Panneau selon l'une quelconque des revendications précédentes, dans lequel la matière constituant le caisson extérieur (2) présente un module d'élasticité (module de Young) au moins égal à huit mille Newtons par millimètre carré (N/mm2).

14. Panneau selon l'une quelconque des revendications précédentes, dans lequel la matière constituant le caisson extérieur (2) présente une dureté comprise entre cinq et cinquante Barcols.

15. Panneau selon l'une quelconque des revendications précédentes, dans lequel la matière constituant le caisson extérieur (2) présente une résistance à la traction au moins égale à cinquante Newtons par millimètre carré (50 N/mm2).

## Patentansprüche

1. Aufbauwand für Kühlfahrzeuge, die enthält
- eine äußere Kassette (2) aus mindestens einem gas- und flüssigkeitsdichten Material, die gegenüberliegende Hauptplatten (3, 4) und einen Felder (6) bildenden Rahmen (5) aufweist,
- und einen Haltekern (7), der im Inneren der äußeren Kassette enthalten ist, in Kontakt mit den Hauptplatten,
**dadurch gekennzeichnet, dass** im Haltekern (7) offene Hohlzellen angeordnet sind, die miteinander in Verbindung stehen,
und dass die äußere Kassette (2) mit mindestens einer Durchgangsöffnung (9), die im Inneren der äußeren Kassette mündet, und mit einer Schließeinrichtung versehen ist, um die Öffnung gas- und flüssigkeitsdicht zu verschließen.

2. Wand nach Anspruch 1, wobei der Haltekern (7) mit den Feldern der äußeren Kassette in Kontakt ist.

3. Wand nach einem der Ansprüche 1 und 2, wobei der Haltekern (7) mindestens einen porösen Block mit offenen Zellen (11) enthält, der gegenüberliegende Seiten in Auflage gegen die gegenüberliegenden Hauptplatten (3, 4) aufweist.

4. Wand nach Anspruch 3, wobei der Block (11) einen porösen Schaum aus einem Kunststoff mit offenen Zellen enthält.

5. Wand nach Anspruch 3, wobei der Block (11) ein verstärktes organisches und/oder mineralisches Pulver mit offenen Zellen enthält.

6. Wand nach einem der Ansprüche 1 und 2, wobei der Haltekern (7) ein wabenförmiges Modul (12) enthält, dessen Zellen oder Kammern bildende Wände (13) sich zwischen den gegenüberliegenden Wänden (3, 4) der äußere Kassette (2) erstrecken und Durchlassdurchgänge (14) zur Verbindung zwischen diesen Zellen und mit der Öffnung (9) aufweisen.

7. Wand nach einem der vorhergehenden Ansprüche, wobei die äußere Kassette (2) mindestens einen metallischen Teil enthält.

8. Wand nach einem der vorhergehenden Ansprüche, wobei die äußere Kassette (2) mindestens eine Schicht aus einem Verbundmaterial und mindestens eine Metallfolie enthält.

9. Wand nach einem der vorhergehenden Ansprüche, wobei mindestens eine Schicht (5c) aus einem wärmeisolierenden und gas- und flüssigkeitsdichten Material zwischen den Rahmen (5) und mindestens eine der Hauptplatten (3, 4) der äußeren Kassette (2) eingefügt ist.

10. Wand nach einem der vorhergehenden Ansprüche, wobei mindestens ein Teil des Rahmens (5) und mindestens eine der Hauptplatten (3, 4) der äußeren Kassette (2) aus einem Stück hergestellt sind.

11. Wand nach einem der vorhergehenden Ansprüche, wobei der Absolutdruck des Gases innerhalb der äußeren Kassette (2) niedriger als hundert Millibar (10 Kilonewton pro Quadratmeter) ist.

12. Wand nach einem der vorhergehenden Ansprüche, wobei das den Haltekern (7) bildende Material eine solche Druckfestigkeit aufweist, dass unter einem Druck gleich einem Bar (100 Kilonewton pro Quadratmeter) seine Dickenreduzierung geringer als fünf Prozent (5%) ist.

13. Wand nach einem der vorhergehenden Ansprüche, wobei das die äußere Kassette (2) bildende Material einen Elastizitätsmodul (Young-Modul) mindestens gleich achttausend Newton pro Quadratmillimeter (N/mm²) aufweist.

14. Wand nach einem der vorhergehenden Ansprüche, wobei das die äußere Kassette (2) bildende Material eine Härte zwischen fünf und fünfzig Barcol aufweist.

15. Wand nach einem der vorhergehenden Ansprüche, wobei das die äußere Kassette (2) bildende Material eine Zugfestigkeit mindestens gleich fünfzig Newton pro Quadratmillimeter (50 N/mm²) aufweist.

## Claims

1. Bodywork panel for refrigerated vehicles, comprising:
- an outer casing (2) made from at least one gastight and liquidtight material, having opposite main plates (3, 4) and a frame (5) forming edge faces (6),
- and a supporting core (7) contained inside the said outer casing, in contact with the said main plates,
**characterized in that** the said supporting core (7) creates open hollow cells which intercommunicate, and **in that** the said outer casing (2) is provided with at least one through-orifice (9) opening into the said outer casing and with a closure means for closing the said orifice in a gastight and liquidtight fashion.

2. Panel according to Claim 1, in which the supporting core (7) is in contact with the edge faces of the said outer casing.

3. Panel according to one of Claims 1 and 2, in which the supporting core (7) comprises at least one open-cell porous block (11) having opposite faces bearing against the said opposite main plates (3, 4).

4. Panel according to Claim 3, in which the said block (11) comprises a porous foam of an open-cell synthetic material.

5. Panel according to Claim 3, in which the said block (11) comprises an open-cell reinforced organic and/or inorganic powder.

6. Panel according to one of Claims 1 and 2, in which the supporting core (7) comprises a honeycomb module (12) the walls (13) of which form cells or pockets extending between the opposite walls (3, 4) of the said outer casing (2) and have through-passages (14) for communication between these cells and with the said orifice (9).

7. Panel according to any one of the preceding claims, in which the outer casing (2) comprises at least one metallic part.

8. Panel according to any one of the preceding claims, in which the outer casing (2) comprises at least one layer made of a composite material and at least one metal sheet.

9. Panel according to any one of the preceding claims, in which at least one layer (5c) of a thermally insulating and gastight and liquidtight material is interposed between the frame (5) and at least one of the said main plates (3, 4) of the outer casing (2) .

10. Panel according to any one of the preceding claims, in which at least part of the frame (5) and at least one of the said main plates (3, 4) of the outer casing (2) are produced as a single piece.

11. Panel according to any one of the preceding claims, in which the absolute pressure of the gas inside the said outer casing (2) is below 100 millibar (10 kiloNewtons per square metre).

12. Panel according to any one of the preceding claims, in which the material of which the supporting core (7) is made has a compressive strength such that, under a pressure equal to 1 bar (100 kiloNewtons per square metre) its reduction in thickness represents less than five per cent (5%).

13. Panel according to any one of the preceding claims, in which the material of which the outer casing (2) is made has an elastic modulus (Young's modulus) at least equal to eight thousand Newtons per square millimetre (N/mm2).

14. Panel according to any one of the preceding claims, in which the material of which the outer casing (2) is made has a hardness comprised between five and fifty Barcol units.

15. Panel according to any one of the preceding claims, in which the material of which the outer casing (2) is made has a tensile strength at least equal to fifty Newtons per square millimetre (50 N/mm2).
